# EUROPEAN PATENT SPECIFICATION

(11) **EP 2 439 617 B1**
(45) Date of publication and mention of the grant of the patent: **13.05.2015**
(21) Application number: 10179194.5
(22) Date of filing: 24.09.2010
(51) Int. Cl.: G06F 3/039

(54) **Mouse pad with accommodating structure**
Mauspad mit aufnehmender Struktur
Tapis de souris avec structure d'accommodation

(43) Date of publication of application: 11.04.2012
(73) Proprietor: Giga-Byte Technology Co., Ltd., New Taipei City 231 (TW)
(72) Inventor: Lin, Yin-Yu, 231 Taipei County (TW); Shih, Po-Jen, 231 Taipei County (TW); Chen, Shu-I, 231 Taipei County (TW)
(74) Representative: Schwerbrock, Florian

(56) References cited:
- CN-Y- 2 593 261
- US-A- 5 844 775
- US-A1- 2008 164 157
- US-A1- 2009 190 859

## Description

### Field of the Invention

The present invention relates to a mouse pad with accommodating structure, and more particularly, to a mouse pad for accommodating computer mouse therein.

### Description of the Prior Art

With the ages progress, computers are widespread increasingly. More and more people carry notebook computers with them to deal with work at any time for the purpose of convenience. A mouse is used as a computer input device to control the movement of a cursor on a video display connected to the computer. As for notebook computers, cursor location is controlled by response to the movement of the finger across a touch panel. However, most of people are not familiar with such touch operation because they get used to handle the computer by means of a mouse. And the accuracy of the movement of finger is not as good as the operation on the hand-held mouse. As a result, most of people tend to carryon mouse device additionally when taking notebook computer outside.

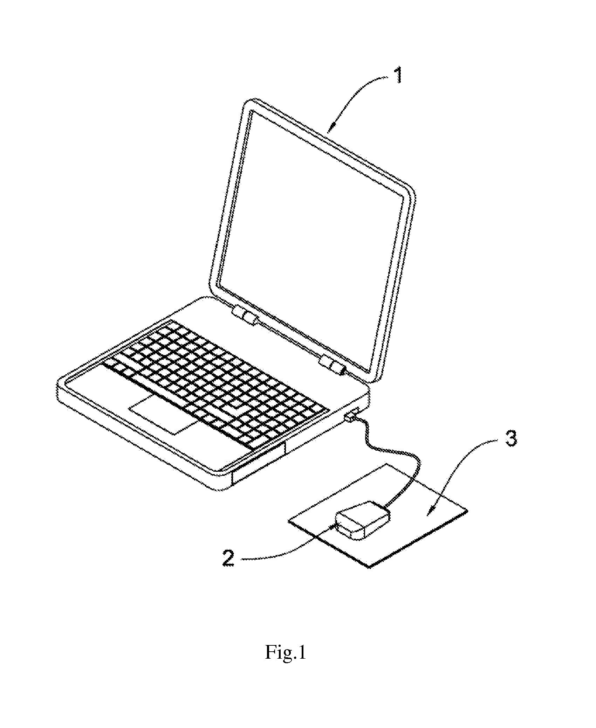

Fig.1 is the diagram of a conventional notebook computer connected with mouse device, which illustrates the way of notebook computer 1 connecting with mouse device 2. However, the current mouse device 2 is generally optical mouse which requires a perfect flat surface for placing mouse operating thereon. The optical mouse is unable to control the movement of cursor exactly when placed on such as flat surface of bad reflectivity or glass surface, which reduce efficiency of operations greatly. Thus the user needs to carryon a mouse pad 3 additionally for the purpose of providing a suitable operating flat surface required for optical mouse, which is inconvenient for the user that carryon mouse 2 together with mouse pad 3 To facilitate the carryon of a computer mouse and a mouse pad, US 2008/164157 discloses a foldable mouse pouch wherein the user may store and carry e.g. a computer mouse. Likewise, CN 2593261 discloses a mouse cushion capable of packing a computer mouse. Moreover, US 2009/190859 discloses a folding bag that can open up into a (sitting) mat, and US 5,844,775 discloses a computer mouse cable holder for holding a mouse cable in a stationary position relative to an area of use of the computer mouse. Integrating a mouse 2 and mouse pad 3 together leads to convenience for carryon.

### Summary of the Invention

The primary objective of the invention herein is to provide a kind of improved mouse device pad with accommodating structure for securely integrating mouse and mouse pad together by accommodating computer mouse in mouse pad, which improves carrying convenience.

This objective is achieved by the invention as defined in the independent claim.

### BRIEF DESCRIPTION OF THE DRAWINGS

Fig.1 shows the notebook computer connected to a mouse device of the prior art;
Fig.2A shows the mouse pad with accommodating structure according to the present invention;
Fig.2B is the enlarged view of the second fasten member according to the present invention;
Fig.3A shows the mouse pad when accommodated with a mouse therein;
Fig.3B shows the mouse pad according to the other embodiment when accommodated with a mouse therein;
Fig.3C shows the mouse pad according to the other embodiment when accommodated with a mouse therein.

### DETAILED DESCRIPTION OF THE INVENTION

The aforementioned objects and advantages of the present invention will be more fully understood hereinafter as a result of a detailed description when taken in conjunction with the following drawings in which:

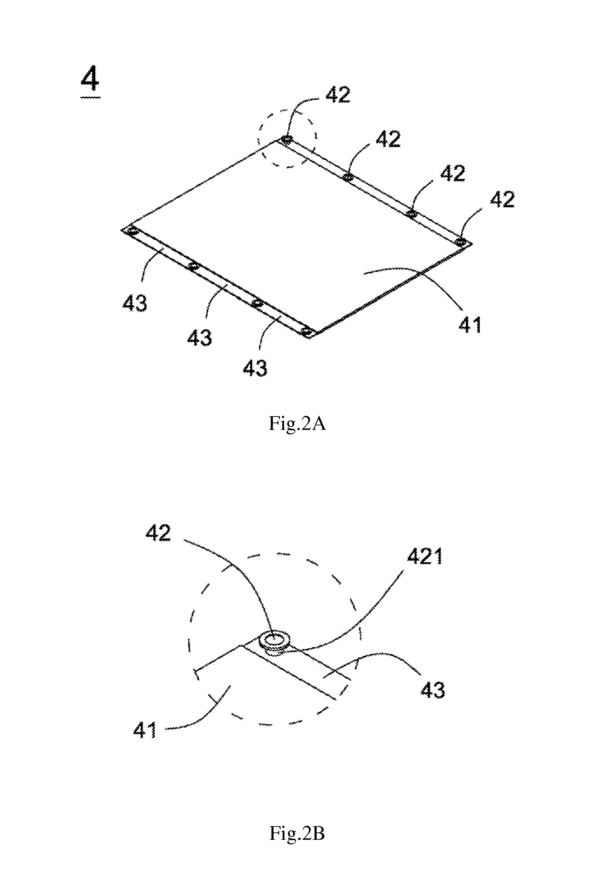

Fig.2A shows the mouse pad with accommodating structure according to the present invention. The mouse device pad 4 with accommodating structure includes a mouse pad body 41 and a plurality of fasten members 42, wherein the fasten members 42 are positioned respectively at both side edges of the right/wrong side of the mouse pad body 41. The numbers and configuration of the fasten members 42 according to the present invention are not limited. There is a grooved rim 43 disposed along each edge of both the right/wrong side of the mouse pad body, in which the fasten members 42 are positioned therein, such that the fasten members 42 do not protrude out of both the right/wrong side of the mouse pad body 41. Fig.2B is the enlarged view of the second fasten member according to the present invention. The fasten member 42 is provided with a cable-accepting member 421, which aims to wind the connecting cable of the mouse 2 and accept the cable therein. The cable-accepting member 421 can be positioned on any one of the fasten members 42 or not limited according to the present invention.

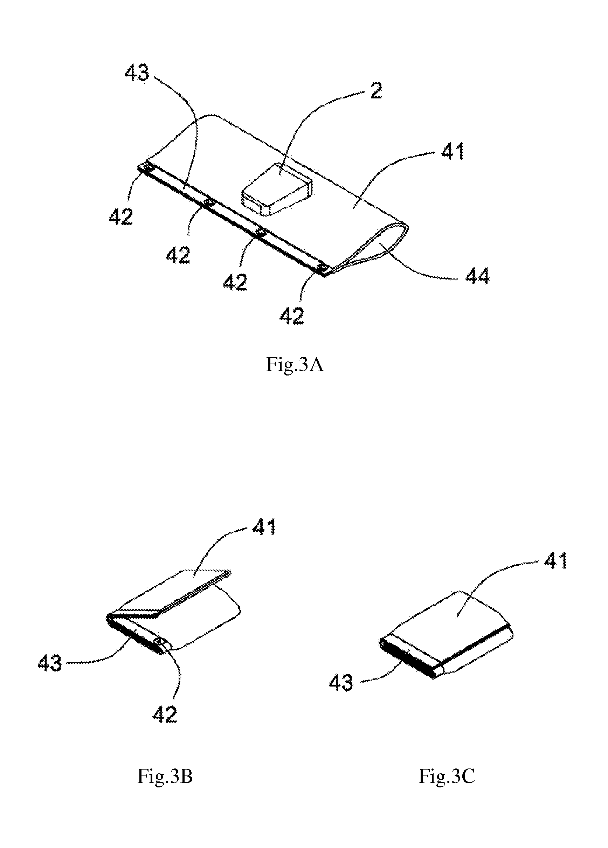

Referring now to Fig.3A, Fig.3A shows the mouse pad when accommodated with a mouse therein. The fasten member 42 is corresponding to the other one 42 for bonding together, to make the mouse pad body 41 forming a folded structure, such that an accommodating room 44 formed within the mouse pad body 41 which is applied to accommodating a mouse device 2 or other content object that is not limited according to the present invention. The fasten members 42 positioned oppositely on both the right/wrong side of the mouse pad body 41 are one-batch formed, which are mounted through each side edge of the mouse pad body 41. Fig.3B shows the mouse pad according to the other embodiment when accommodated with a mouse therein. The mouse pad body 41 is bended continuously in accordance with the content object contained in the accommodating room 44, in this case, either of the side edge of the mouse pad body 41 is bended each other to make the fasten member 42 be corresponding to the other one 42 for bonding together. Fig.3C shows the mouse pad according to the other embodiment when accommodated with a mouse therein. When the fasten members 42 are bonded together, the side edge of the right/wrong side of the mouse pad body 41 is mutually folded, such that the content object contained in the accommodating room 44 is covered by the mouse pad body 41 exactly. Preferably, the fasten members are shaped as button, velcro, or zipper. The bonding position of the fasten members 42 can be adjusted on the basis of the content object in the accommodating room 44.

## Claims

1. A mouse pad (4) with accommodating structure comprising:
a mouse pad body (41) for accommodating a mouse (2) having a connecting cable; and
**characterized in that** mouse pad (4) further comprising a plurality of button-shaped fasten members (42), which are positioned respectively at two side edges on both the front and the back side of the mouse pad body (41), and are corresponding to one another for bonding together, at least one of said button-shaped fasten members (42) being provided with a cable-accepting member (421) for winding the connecting cable of the mouse (2) and accepting the cable therein;
wherein when the button-shaped fasten members (42) are bonded together, the side edge of the mouse pad body (41) is mutually folded, and the mouse (2) contained in an accommodating room (44) is covered by the mouse pad body (41).

2. A mouse pad (4) with accommodating structure as described in claim 1, also comprising a grooved rim (43) disposed along each edge of the both sides of the mouse pad body (41), where the button-shaped fasten members (42) are positioned thereon.

## Patentansprüche

1. Ein Maus-Pad (4) mit aufnehmender Struktur, beinhaltend:
ein Mousepad-Körper (41) zur Aufnahme einer Maus (2) mit einem Verbindungskabel; und
in diesem Maus-Pad (4) ferner eine Vielzahl von knopfförmigen Befestigungselemente (42), die jeweils an beiden Seitenkanten auf der Vorder- und der Rückseiten des Maus-Pads Körper (41) positioniert sind, und zum Zwecke des Verbindens einander entsprechen, wobei mindestens eines der knopfförmige Befestigungselemente (42) mit einer vorgesehenen
Kabel-aufnehmenden Element (421) zum Aufwickeln des Anschlusskabels der Maus (2) und zur Aufnahme des Kabels darin;
wobei, wenn die knopfförmigen Befestigungselemente (42) miteinander verbunden sind, die Seitenkanten des Maus-Pad-Körpers (41) gegenseitig gefaltet und die Maus (2), die in einem Aufnahmeraum (44) enthalten ist, durch die Maus-Pad-Körper (41) abgedeckt ist.

2. Ein Maus-Pad (4) mit aufnehmender Struktur nach Anspruch 1, außerdem umfassend einen gerillten Rand (43) entlang jeder Kante der beiden Seiten des Maus-Pads-Körpers (41), wo die knopfförmigen Befestigungselemente (42) darauf positioniert sind.

## Revendications

1. Un tapis de souris (4) avec une structure d'habitacle comprenant :
un boîtier de tapis de souris (41) pour loger une souris (2) ayant un câble de connexion ; et
caractérisé dans ce tapis de souris (4) comportant en outre plusieurs éléments de fermeture en forme de bouton (42), qui sont placés respectivement aux deux bords des deux côtés sur l'avant et l'arrière du J2 coté ZT du boîtier de tapis de souris (41), et correspondent respectivement l'un à l'autre pour relier ensemble, au moins un desdits éléments de fermeture en forme de bouton (42) étant équipé d'un élément acceptant le câble (421) pour enrouler le câble de connexion de la souris (2) et pour y accepter le câble 2-f J Z WfBiW ;
où quand les éléments de fermeture en forme de bouton (42) sont reliés ensemble, le bord latéral du boîtier du tapis de souris (41) est mutuellement plié, et la souris (2) contenue dans un habitacle (44) est couverte par le boîtier du tapis de souris (41).

2. Un tapis de souris (4) avec la structure d'habitacle comme décrit dans la revendication 1, comportant également un rebord rainuré (43) disposé le long de chaque bord des deux côtés du boîtier de tapis de souris (41), où les éléments de fermeture en forme de bouton (42) sont placés dessus.
